# EUROPÄISCHE PATENTSCHRIFT

(11) **EP 3 446 003 B1**
(45) Veröffentlichungstag und Bekanntmachung des Hinweises auf die Patenterteilung: **26.10.2022**
(21) Anmeldenummer: 17720396.5
(22) Anmeldetag: 20.04.2017
(51) Int. Cl.: F16H 63/34, F16H 63/30, F16H 61/26, F16H 61/28

(54) **AKTUATOR UND VORRICHTUNG ZUM EINLEGEN EINER PARKSPERRE EINES KRAFTFAHRZEUGAUTOMATIKGETRIEBES MIT EINEM DERARTIGEN AKTUATOR SOWIE EIN DAMIT AUSGESTATTETES KRAFTFAHRZEUG**
ACTUATOR, DEVICE FOR ENGAGING A PARKING LOCK OF A MOTOR-VEHICLE AUTOMATIC TRANSMISSION HAVING SUCH AN ACTUATOR AND MOTOR VEHICLE EQUIPPED THEREWITH
ACTIONNEUR ET DISPOSITIF POUR ACTIONNER UN FREIN DE STATIONNEMENT D'UNE BOÎTE DE VITESSES AUTOMATIQUE DE VÉHICULE AUTOMOBILE À L'AIDE D'UN ACTIONNEUR DE CE TYPE AINSI QUE VÉHICULE AUTOMOBILE ÉQUIPÉ DE CE DISPOSITIF

(30) Priorität: 21.04.2016 DE 102016107449
(43) Veröffentlichungstag der Anmeldung: 27.02.2019
(73) Patentinhaber: Küster Holding GmbH, 35630 Ehringshausen (DE)
(72) Erfinder: BLÜCHER, Martin, 35630 Ehringshausen (DE); SCHMIDT, Thomas, 35410 Hungen-Rodheim (DE); SCHIRMER, Heiko, 21649 Regesbostel (DE); JUNKER, Bernd, 35764 Sinn-Edingen (DE)
(74) Vertreter: Müller, Eckhard
(86) Internationale Anmeldenummer: PCT/EP2017/059362
(87) Internationale Veröffentlichungsnummer: WO 2017/182555

(56) Entgegenhaltungen:
- DE-A1- 19 610 491
- US-A- 4 531 423
- US-A1- 2013 263 684
- US-A1- 2013 305 865

## Beschreibung

Die Erfindung betrifft einen Aktuator nach dem Oberbegriff des Patentanspruchs 1. Weiterhin betrifft die Erfindung eine Vorrichtung zum Aktivieren einer Parksperre eines Kraftfahrzeugautomatikgetriebes gemäß Patentanspruch 10 sowie ein damit ausgestattetes Kraftfahrzeug gemäß Anspruch 12.

Der Einsatz von automatischen Schaltbetätigungen beziehungsweise Shift-by-Wire-Systemen in Kraftfahrzeugen bietet gegenüber mechanisch gekoppelten Schaltbetätigungen einige Vorteile. So können beispielsweise die Schaltstufen des Getriebes flexibel und in Abhängigkeit des Fahrzeugzustandes per Software gewählt werden. Auch das Aktivieren der Parksperre durch Einlegen der P-Stufe erfolgt hierbei nicht mehr manuell durch den Fahrer, sondern wird durch die Steuerungssoftware, zum Beispiel beim Anhalten oder beim Verlassen des Fahrzeuges, automatisch sichergestellt. Da ein Einlegen der P-Stufe zum Aktivieren der Parksperre vor dem Verlassen des Kraftfahrzeuges aus Sicherheitsgründen zwingend erforderlich ist, verfügen derartige Systeme und Aktuatoren über Notfallmechanismen, die auch bei Störungen des Aktuators oder bei Spannungsausfall ein Einlegen der P-Stufe gewährleisten sollen. Diese Notfallmechanismen arbeiten typischerweise mit Energiespeichern, wie zum Beispiel mechanischen Federelementen, welche unabhängig vom Aktuator etwa das Einlegen einer mechanischen Notposition sicherstellen.

Ein Aktuator nach dem Oberbegriff des Patentanspruchs 1 ist aus der DE 10 2011 014 815 A1 bekannt. Darin wird ein Kraftfahrzeugparksperrenaktuator mit zumindest einer Spindel beschrieben, bei dem aus einer rotatorischen Bewegung eines Motors eine Längsbewegung zum automatischen Schalten einer Getriebestufe realisiert wird. Die Notfallfunktion zum Einlegen der Parksperre wird hierbei durch ein Federelement realisiert, welches durch das Betätigen der Nichtparkstellung des Aktuators vorgespannt und durch eine Verrastung mechanisch gehalten wird. Eine Schaltfunktion zum Auslösen des Notfallmechanismus zum Einlegen der P-Stufe soll durch eine vom Aktuator unabhängige Spannungsquelle erfolgen. Nachteilig bei diesem Aktuator ist allerdings, dass zum Auslösen des Notfallmechanismus eine unabhängige Spannungsquelle benötigt wird. Daher kann die P-Stufe nicht eingelegt werden, wenn die unabhängige Spannungsquelle ebenfalls nicht zur Verfügung steht, was insbesondere dann vorkommen kann, wenn der Akkumulator des Kraftfahrzeuges entladen ist und auch keine sonstige Spannungsquelle, wie beispielsweise ein ordnungsgemäß funktionierender Generator zur Verfügung steht.

Weiterhin muss bei dem Aktuator der DE 10 2011 014 815 A1 zum Vorspannen des Federelementes die P-Stufe verlassen werden, wodurch eine ungewollte und unsichere Fahrzeugsituation entsteht, weil die P-Stufe des Getriebes verlassen wird, obwohl der Notfallmechanismus noch nicht zur Verfügung steht.

Aus der DE 100 45 953 B4 ist eine Parksperrvorrichtung bekannt, die insbesondere für ein mit einem automatisiert steuerbaren Getriebe versehenes Kraftfahrzeug vorgesehen ist. Die Parksperrvorrichtung weist eine Betätigungsvorrichtung auf, die ein Betätigungselement zur Betätigung einer Parksperre, einen Federspeicher zur Aktivierung der Parksperre, einen steuerbaren Stellantrieb zur Deaktivierung der Parksperre und eine Sperrvorrichtung zur Arretierung der Parksperre im deaktivierten Zustand umfasst. Der Stellantrieb ist elektromechanisch wirksam ausgebildet und mit einem Hauptbetätigungshebel verbunden. Der Federspeicher, der Stellantrieb und die Sperrvorrichtung sind über den Hauptbetätigungshebel mit dem Betätigungselement in Verbindung bzw. in Wirkverbindung bringbar.

Aus der US 2013/305865 A1 ist ein Getriebeschaltsystem mit einem Aktuator zur Steuerung einer Gangschaltung eines Getriebes bekannt. Das Schaltsystem kann ein "shift-by-wire"- System sein. Eine Bedienereingabe für das Schalten eines Ganges wird an einen Elektromotor des Aktuators übertragen. Zum Schalten zwischen den Getriebegängen treibt der Elektromotor eine Ausgangswelle des mit dem Getriebe gekoppelten Aktuators an. Ein Verriegelungsmechanismus zum Überführen des Getriebes in eine Parkstellung weist eine Torsionsfeder auf, die durch Bewegen eines Schenkels in einer Richtung gelöst wird. Zur Bewegung dieses Schenkels ist ein.

Aus der US 4 531 423 A ist eine federunterstützte Schaltvorrichtung für ein Vierradantrieb-Verteilergehäuse eines Kraftfahrzeugs bekannt. Die Vorrichtung weist eine Nockenplatte auf, die um eine Achse herum zu einer Vielzahl von Positionen drehbar gelagert ist, wobei die Nockenplatte eine Nockenspur aufweist. Ein Nockenfolger ist mit der Nockenbahn wirkverbunden und dazu ausgelegt, eine zugeordnete Schaltgabel als Reaktion auf eine selektive Drehung der Nockenplatte zu bewegen. Ein federunterstützter Mechanismus mit einem Federelement übt eine auf die Nockenplatte wirkende Vorspannung aus.

Aus der DE 196 10 491 A1 ist eine Stelleinrichtung zur Automatisierung von Handschaltgetrieben von Fahrzeugen bekannt, mit der eine Schaltwelle des Getriebes über wenigstens einen Antrieb zur Gassenwahl und zum Gangeinlegen um ihre Achse drehbar sowie in ihrer Achsrichtung verschiebbar ist. Ein Steuerelement weist eine Kulissenführung zum Verschieben und eine Steuerbahn zum Drehen der Schaltwelle auf. Mit dem Antrieb wird das Steuerelement gedreht. Über die Kulissenführung kann die Schaltwelle in der erforderlichen Richtung axial verschoben werden, während mit Hilfe der Steuerbahn die Schaltwelle in der erforderlichen Richtung gedreht wird. Somit kann durch Verdrehen und Verschieben der schaltwelle die jeweilige Gasse angefahren bzw. der jeweilige Gang eingelegt werden.

Aus der US 2013/0263684 A1 ist ein Schaltsystem für einen Kraftübertragungsmechanismus bekannt, mit einer ersten Sektorplatte, die zwischen einer ersten und einer zweiten Position drehbar ist, wobei eine zweite Sektorplatte drehbar mit der ersten Sektorplatte gekoppelt und zwischen der ersten und der zweiten Position beweglich ist. Mittels der zweiten Sektorplatte ist ein Schaltelement bewegbar. Ein Vorspannelement wirkt auf die erste und die zweite Sektorplatte ein.

Aufgabe der Erfindung ist es daher, einen Aktuator nach dem Oberbegriff des Patentanspruchs 1 derart weiterzubilden, dass gewährleistet ist, dass in allen Situationen, insbesondere beim Ausfall der Spannungsversorgung, ein Betätigungselement zum Betätigen einer Schaltvorrichtung des Aktuators automatisiert in seine Ausgangsstellung zurückgeführt wird. Ferner ist es Aufgabe der Erfindung, eine Vorrichtung zum Einlegen einer Parksperre eines Kraftfahrzeugautomatikgetriebes mit einem derartigen Aktuator sowie ein verbessertes Kraftfahrzeug zur Verfügung zu stellen.

Hinsichtlich des Aktuators wird diese Aufgabe gelöst durch einen Aktuator mit allen Merkmalen des Patentanspruchs 1. Bezüglich der Vorrichtung zum Einlegen einer Parksperre eines Kraftfahrzeugautomatikgetriebes wird die Aufgabe gelöst durch eine Vorrichtung mit allen Merkmalen des Patentanspruchs 10.

Die Aufgabe wird ferner gelöst durch ein Kraftfahrzeug gemäß Anspruch 12. Vorteilhafte Ausgestaltungen der Erfindung finden sich in den Unteransprüchen.

Der erfindungsgemäße Aktuator weist dabei einen eine Antriebswelle antreibenden Antrieb, ein mit der Antriebswelle in Wirkverbindung stehendes erstes Betätigungselement zum Betätigen einer Schalteinrichtung und ein Federelement auf, wobei das Federelement einerseits an einem Gehäusebauteil des Aktuators abstützbar ist und sich andererseits an einem zum Spannen des Federelementes ausgebildeten zweiten Betätigungselement abstützt. Die Erfindung zeichnet sich nunmehr dadurch aus, dass ein mittels der Antriebswelle antreibbares und drehbar gelagertes Drehelement vorgesehen ist, das einerseits mit einer ersten Steuerkurve, welche mit dem ersten Betätigungselement wirkverbunden ist, und andererseits mit einer zweiten Steuerkurve zum Spannen des Federelementes ausgebildet ist. Das Federelement hat dabei die Funktion, beim Vorliegen einer Störung des Aktuators oder bei Spannungsausfall, die P-Stufe einzulegen. Dazu ist das Federelement mittels des zweiten Betätigungselementes auch mit dem ersten Betätigungselement wirkverbindbar, so dass auf Grund der durch die Vorspannung des Federelementes aufgebrachte Rückstellkraft das erste Betätigungselement entlang der ersten Steuerkurve in die P-Stufe zurückführbar ist. Insbesondere kann das zweite Betätigungselement als Mitnehmer für das erste Betätigungselement ausgebildet sein.

Zum Verlassen der P-Stufe und Einlegen der unterschiedlichen Schaltstufen, beispielsweise R, N, D, ist das Drehelement mittels des Antriebes und der Antriebswelle so verdrehbar, dass die erste Steuerkurve das erste Betätigungselement auf Grund des Wirkkontaktes mit der ersten Steuerkurve bewegen kann. Eine den Aktuator und das Automatikgetriebe verbindende Schalteinrichtung, beispielsweise mit einem Schaltseilzug, ist dazu ausgebildet, die am Aktuator erzeugte Bewegung zu dem Automatikgetriebe weiterzuleiten, so dass die P-Stufe verlassen und unterschiedliche Schaltstufen, beispielsweise R, N, D eingestellt werden können.

Dazu kann die erste Steuerkurve verschiedene Steigungen für die Schaltbewegung bzw. zum Einlegen der Schaltstufen aufweisen. Die Steigung der Steuerkurve kann beispielsweise so ausgelegt sein, dass ausreichend Stellkraft zum Auslegen der Parksperre mittels des Aktuators oder einer Notverstelleinrichtung unter allen Bedingungen erzeugt werden kann. Die Stellkraft setzt sich dabei im Wesentlichen aus der im Getriebe erforderlichen Mindestverstellkraft zum Einlegen unterschiedlicher Schaltstufen und ggf. der Rückstellkraft des Federelementes zusammen, gegen die der Aktuator bereits beim Verlassen der P-Stufe arbeitet. Beispielsweise kann eine solche Stellkraft etwa 500N betragen. Im Falle eines Notbetriebs werden im Gegenzug das Drehelement und der Motor durch die Steigung der ersten Steuerkurve im Zusammenwirken mit den ersten und zweiten Betätigungselementen des Aktuators unter dem Einfluss der von dem Federelement aufgebrachten Federkraft zurückgedreht.

Dabei ist zum An- beziehungsweise Eingriff in die erste Steuerkurve ein erstes Eingriffselement des Betätigungselementes zum Betätigen einer Schalteinrichtung und zum An- beziehungsweise Eingriff in die zweite Steuerkurve ein zweites Eingriffselement des zweiten Betätigungselementes vorgesehen.

Die erfindungsgemäße Vorrichtung zum Einlegen einer Parksperre in einem Automatikgetriebe eines Kraftfahrzeuges weist dabei einen derartigen erfindungsgemäßen Aktuator auf.

Durch den Einsatz eines erfindungsgemäßen Aktuators in einer Vorrichtung zum Einlegen einer Parksperre in einem Automatikgetriebe eines Kraftfahrzeuges ist es nunmehr gewährleistet, dass das Federelement immer vorgespannt werden kann, bevor die P-Stufe des Automatikgetriebes des Kraftfahrzeuges verlassen wird. Mittels der zweiten Steuerkurve und des zweiten Eingriffselementes des zweiten Betätigungselementes ist es nämlich nunmehr möglich, das Federelement vorzuspannen, ohne dass sich die Position des ersten Betätigungselementes ändert. Hierdurch ist es ermöglicht, das Federelement vorzuspannen, während sich das erste Betätigungselement beim Einsatz eines derartigen Aktuators in einem Kraftfahrzeug mit einem Automatikgetriebe in einer derartigen Position befindet, dass das Automatikgetriebe des Kraftfahrzeuges in der P-Stufe eingestellt ist.

Das Drehelement kann in der Reichweite seiner Drehbewegung zwischen einer maximalen negative und einer maximalen positiven Drehposition aufgrund der Ausgestaltung der ersten und/oder der zweiten Steuerkurve beschränkt sein, so dass beispielsweise eine halbe Drehung in jeweils eine Drehrichtung, also etwa +180° oder - 180° möglich sind. In einer besonders vorteilhaften Ausgestaltung der Erfindung wird dies dadurch erreicht, dass das Drehelement mit den beiden Steuerkurven derart ausgebildet ist, dass es durch die Antriebswelle beziehungsweise den Antrieb zwischen einer maximalen negativen Winkelposition bei bis zu -180° und einer maximalen positiven Winkelposition bei bis zu +180° verdrehbar ist, wobei eine Drehung von 0° bis zur maximalen negativen Winkelposition, also bis zu -180°, mittels der zweiten Steuerkurve und des zweiten Eingriffselementes des zweiten Betätigungselementes das Federelement gespannt wird, während die erste Steuerkurve derart ausgebildet ist, dass bei einer derartigen Drehung des Drehelementes die Position des ersten Betätigungselementes unverändert bleibt. Hierdurch ist in einfacher Weise gewährleistet, dass die P-Stufe des Automatikgetriebes eingelegt bleibt, während das Federelement unter Aufbau einer Rückstellkraft vorgespannt wird. Andere durch die maximalen Winkelpositionen vorgegebene Winkelbereiche, insbesondere kleinere Winkelbereiche sind im Sinne der Erfindung ebenfalls denkbar. So kann die vorliegende Erfindung auch bei aufgrund der Ausgestaltung der Steuerflächen vorgegebenen Drehbereichen bei 0° bis etwa 170° und/oder 0° bis etwa -170° verwirklicht werden.

Es ist vorgesehen, dass bei einer Drehung des Drehelementes von 0° in Richtung der maximalen positiven Winkelposition, bspw. bis zu 180°, mittels der ersten Steuerkurve und des ersten Eingriffselementes des ersten Betätigungselementes unterschiedliche Schaltstufen einer solchen Schalteinrichtung einstellbar sind. Hierdurch ist es ermöglicht, dass unterschiedliche Schaltstufen eines Automatikgetriebes eingestellt werden können, ohne dass dabei gleichzeitig das Federelement gespannt werden muss, da diese Vorspannung des Federelementes bereits durch das zuvor beschriebene Verdrehen des Drehelementes in seine maximale negative Drehposition, bspw. von 0° bis -180° erfolgt. Damit beim Zurückdrehen des Drehelementes aus seiner maximalen Winkelposition, bspw. bei -180°, bis 0° diese Vorspannung erhalten bleibt, ist erfindungsgemäß eine elektrische Haltemagneteinrichtung vorgesehen, mit welcher das unter Aufbau einer Rückstellkraft gespannte Federelement in seiner Position gehalten wird. Somit ist ein Spannen des Federelementes während des Einlegens verschiedener Schaltstufen aus der P-Stufe heraus nicht erforderlich, da dies schon vorab erfolgt ist.

Um eine besonders einfache konstruktive Ausgestaltung des Drehelementes zur Verfügung zu stellen, hat es sich bewährt, dass das Drehelement als Kreisscheibe ausgebildet ist, an welcher die beiden Steuerkurven auf jeweils einer der gegenüberliegenden Flächen der Kreisscheibe angeordnet sind. Insofern können die Steuerkurven mittels der entsprechenden Eingriffselemente problemlos angeordnet werden, ohne dass störende Einflüsse der jeweils anderen Steuerkurve beziehungsweise des dazu korrespondierenden Eingriffselementes berücksichtigt werden müssen.

Sollte das Federelement beim Herausführen aus der P-Stufe einmal nicht vorgespannt sein, so ist die erste Steuerkurve derart ausgebildet, dass beim Verdrehen des Drehelementes von seiner Winkelposition 0° bis zu seiner maximalen positiven Winkelposition bei bis zu +180° das Federelement unter Aufbau einer Rückstellkraft gespannt wird. Dabei erfolgt die Vorspannung des Federelementes insbesondere direkt nach dem Verlassen der P-Stufe, sodass die sofort zur Verfügung gestellte Rückstellkraft des Federelementes ausreicht, das erste Betätigungselement wieder in die P-Stufe zurückzuführen.

In diesem Betriebsfall kann vorgesehen sein, dass das erste Betätigungselement als Mitnehmer für das zweite Betätigungselement wirkt, so dass das Federelement von dem unter der Wirkung des ersten Betätigungselementes mitgenommenen zweiten Betätigungselement unter dem Aufbau der Rückstellkraft in dessen Spannstellung geführt wird.

Nach einem weiteren vorteilhaften Gedanken der Erfindung ist an der Fläche des Drehelementes, an dem die zweite Steuerkurve zum Spannen des Federelementes angeordnet ist, ein Vorsprung zur Anlage des zweiten Eingriffselementes angeordnet. Dieser Vorsprung ist dabei derart angeordnet, dass das zweite Eingriffselement auf diesem Vorsprung abgelegt beziehungsweise angelegt werden kann, wenn sich das erste Betätigungselement in seiner Ausgangsstellung befindet, was der P-Stufe eines Automatikgetriebes und einer Verdrehung des Drehelementes um 0° entspricht. Hierdurch ist es ermöglicht, dass die Feder vorgespannt bleibt, wenn ein mit einem derartigen Aktuator ausgestattetes Kraftfahrzeug ordnungsgemäß abgestellt wurde, und somit der gesamte Aktuator beziehungsweise das gesamte Fahrzeug spannungsfrei ist, da die entsprechenden Stromkreise unterbrochen sind.

Dabei hat es sich weiterhin als vorteilhaft erwiesen, dass auf der Antriebswelle eine Schnecke angeordnet ist, durch welche eine Zahnradanordnung antreibbar ist, die wiederum das Drehelement antreibt. Dabei kann das Drehelement selbst Teil dieser Zahnradanordnung sein, wobei es auch möglich ist, dass die Zahnradanordnung auch aus nur einem Zahnrad besteht.

Alternativ ist es natürlich auch denkbar, dass die Zahnradanordnung aus mehreren Zahnrädern besteht, die miteinander in Wirkverbindung stehen, wobei dann ein Zahnrad als Kreisscheibe ausgebildet ist, welche die entsprechenden Steuerkurven auf ihren gegenüberliegenden Flächen aufweist.

Nach einem weiteren vorteilhaften Gedanken der Erfindung ist ein Dämpfungselement vorgesehen, welches die Bewegung des Drehelementes und/oder des Betätigungselementes zum Betätigen einer Schalteinrichtung und/oder des Betätigungselementes zum Vorspannen des Federelementes dämpft, wenn das Drehelement unter der Einwirkung der Rückstellkraft des Federelementes verdreht wird. Hierdurch ist gewährleistet, dass keine oder kaum störende Geräusche beim unter Einwirkung der Rückstellkraft des Federelementes stattfindenden Verdrehen des Drehelementes auftreten, da die Geräuschentwicklung durch ein derartiges Dämpfungselement unterdrückt beziehungsweise abgeschwächt oder gedämpft wird.

In Weiterbildung dieses Gegenstands kann zudem vorgesehen sein, dass das Dämpfungselement gleichzeitig auch als Mitnahmevorrichtung ausgebildet ist. Dabei kann beim Auslösen des Notfallmechanismus die durch das Federelement bewirkte Bewegung des zweiten Betätigungselementes auf das erste Betätigungselement übertragen werden. Auch kann die beim Spannen des Federelementes ohne Verwendung der zweiten Steuerkurve die mittels des ersten Betätigungselementes bewirkte Bewegung auf das zweite Betätigungselement übertragen werden, an welchem wiederum das Federelement abgestützt ist. Bevorzugt kann hierbei vorgesehen sein, dass ein an dem ersten Betätigungselement ausgebildeter Stift in einer Bohrung des zweiten Betätigungselements verschieblich gelagert ist. Zur Umsetzung einer Dämpfungseigenschaft kann die Bewegung des Stiftes innerhalb der Bohrung mechanisch oder fluiddynamisch gedämpft sein, beispielsweise durch das Einschließen oder Verdrängen einer in der Bohrung befindlichen Gasmenge. Zur Umsetzung einer Mitnahmefunktion kann wiederum vorgesehen sein, dass der Stift und der Grund der Bohrung innerhalb des zweiten Betätigungselementes miteinander in Kontakt bringbar sind, so dass Kräfte übertragbar werden, wenn der Stift des ersten Betätigungselementes auf den Grund der Bohrung des zweiten Betätigungselementes aufliegt. Somit kann der Grund der Bohrung einen mechanischen Anschlag für den Stift bilden.

Selbständig geschützt sein soll auch eine Vorrichtung zum Einlegen einer Parksperre eines Kraftfahrzeugautomatikgetriebes mit einem zuvor beschriebenen Aktuators.

Zudem soll selbstständig auch ein Kraftfahrzeug mittels einer solchen Vorrichtung geschützt sein, wobei das Kraftfahrzeug ein Automatikgetriebe und eine vorstehend beschriebene Vorrichtung zum Einlegen einer Parksperre des Automatikgetriebes aufweist.

Nach einem vorteilhaften Gedanken der Erfindung weist eine derartige Vorrichtung bzw. ein Kraftfahrzeug mit einer solchen Vorrichtung eine mechanische, elektromechanische, elektrische, elektronische, hydraulische oder pneumatische Notverstelleinrichtung auf, mit welcher das Betätigungselement zum Betätigen einer Schalteinrichtung verfahrbar und/oder das Federelement spannbar ist, wenn der Antrieb nicht antreibbar ist.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen.

Es zeigen:
- Figur 1:: ein in einem Gehäuse angeordnetes Ausführungsbeispiel eines erfindungsgemäßen Aktuators,
- Figur 2:: ein Ausführungsbeispiel eines erfindungsgemäßen Aktuators in einer Schnittdarstellung,
- Figur 3:: der Aktuator gemäß Figur 2 in einer perspektivischen Draufsicht von oben,
- Figur 4:: der Aktuator gemäß Figur 3 in einer weiteren perspektivischen Draufsicht von oben,
- Figur 5:: der Aktuator gemäß den Figuren 3 und 4 in einer perspektivischen Draufsicht von unten,
- Figur 6:: der Aktuator gemäß Figur 5 in einer anderen perspektivischen Draufsicht von unten,
- Figur 7:: der Aktuator gemäß Figur 6 in einer weiteren perspektivischen Draufsicht von unten,
- Figur 8:: der Aktuator gemäß Figur 7 in einer weiteren perspektivischen Draufsicht von unten,
- Figur 9:: der Aktuator der vorherigen Figuren in einer Seitendarstellung,
- Figur 10:: der Aktuator der vorherigen Figuren in einer Ansicht von unten und
- Figur 11:: der Aktuator gemäß den vorhergehenden Figuren in einer Ansicht von oben,

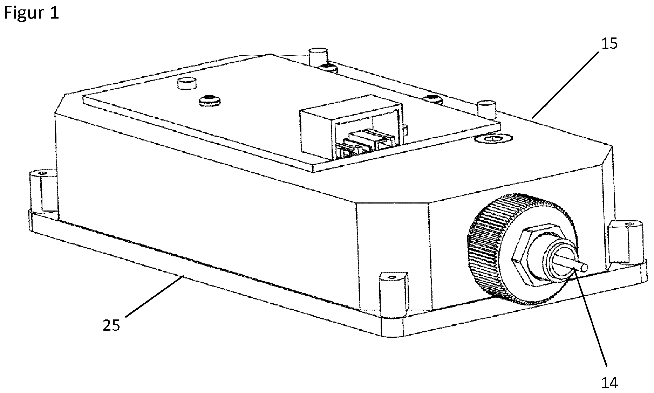

Figur 1 zeigt ein Ausführungsbeispiel eines in einem aus einen Gehäusedeckel 15 und eine Gehäuseplatte 25 aufweisenden Gehäuse angeordneten erfindungsgemäßen Aktuators, wobei Einzelheiten des erfindungsgemäßen Aktuators aufgrund des Gehäuses in dieser Darstellung nicht sichtbar sind. Der Aktuator ist dabei auf der Gehäuseplatte 25 angeordnet und mit dem Gehäusedeckel 15 abgedeckt. Sichtbar ist in dieser Darstellung noch ein Seilzug 14, mittels dem verschiedene Schaltstufen eines Automatikgetriebes eines Kraftfahrzeuges einstellbar sind. Der Seilzug 14 ist dabei in Wirkverbindung mit einem hier nicht sichtbaren ersten Betätigungselement 3 zum Betätigen der Schalteinrichtung des Kraftfahrzeugautomatikgetriebes des Kraftfahrzeuges.

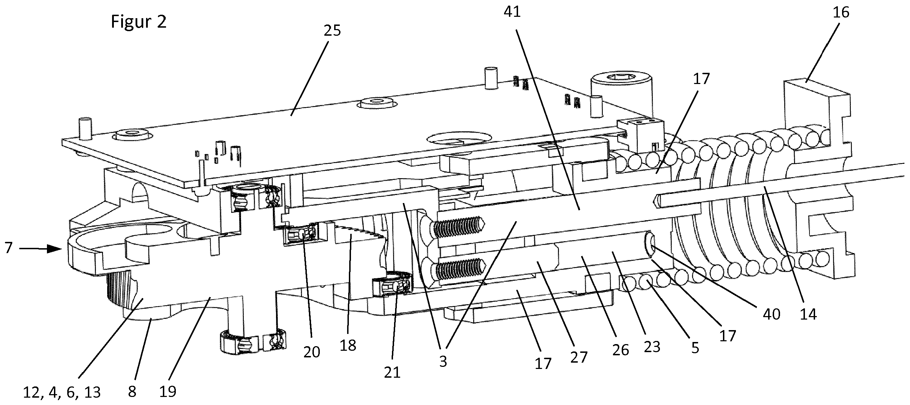

In Figur 2 ist nunmehr das Ausführungsbeispiel des erfindungsgemäßen Aktuators in einer Schnittdarstellung entlang seiner Mittellängsachse gezeigt. Deutlich zu erkennen ist hierbei das als Zahnrad 13 ausgebildete Drehelement 4, welches zudem als Kreisscheibe 6 ausgebildet ist. Das Drehelement 4 ist dabei in seinem Mittelpunkt drehbar gelagert und weist auf seinen gegenüberliegenden Flächen 18 und 19 zwei unterschiedliche Steuerkurven 7 und 8 auf. Das Zahnrad 13, welches auch Teil einer Zahnradanordnung 12 sein kann, kämmt im vorliegenden Fall mit einer in der Figur 2 verdeckten Schnecke 11 einer Antriebswelle 1 eines Antriebes 2.

In der Figur 2 ist weiterhin das erste Betätigungselement 3 erkennbar, welches einerseits mit einem ersten Eingriffselement 20 versehen ist, welches zum Eingriff in die Steuerkurve 7 eingreift und anderseits mit dem Seilzug 14 einer Schalteinrichtung des Automatikgetriebes des Kraftfahrzeuges verbunden ist.

Das erste Betätigungselement 3 ist dabei verschiebbar in einem zweiten Betätigungselement 17 gelagert, welches einerseits mit einem zweiten Eingriffselement 21 zum Eingriff in die zweite Steuerkurve 8 versehen ist und sich andererseits an einem Federelement 5 abstützt. Innerhalb dieses zweiten Betätigungselementes 17 zum Spannen des Federelementes 5 ist weiterhin eine Bohrung 26 angeordnet, in welcher ein Stift 27 des ersten Betätigungselementes 3 verschiebbar gelagert ist. Der Stift 27 ist dabei auf der dem Drehelement 4 zugewandten Seite des zweiten Betätigungselementes 17 in die Bohrung 26 eingeführt und ist darin verschieblich. Das Betätigungselement gleitet gleichzeitig in einer parallel dazu angeordneten Bohrung 41 des zweiten Betätigungselementes 17, über welches das erste Betätigungselement 3 mit dem Seilzug 14 verbunden ist. Der Stift 27 und die Bohrung 26 wirken in der Weise zusammen, dass der Stift mit seinem von dem Drehelement 4 abgewandten Ende auf dem Grund der Bohrung 26 aufsetzen kann. In diesem Fall können Kräfte von dem ersten Betätigungselement 3 auf das zweite Betätigungselement 17 oder von dem zweiten Betätigungselement 17 auf das erste Betätigungselement 3 übertragen werden. Solange das Federelement 5 mittels des zweiten Betätigungselementes 17 in der in Figur 2 bezeigten Spannstellung verharrt, kann das erste Betätigungselement 3 bezüglich des zweiten Betätigungselementes 17 in Richtung der Bohrung 26 beziehungsweise in Richtung der dazu parallel angeordneten Bohrung und in Richtung des Seilzugs 14 verstellt werden, um unterschiedliche Schaltstufen des Automatikgetriebes einzulegen. Sobald der Stift 27 mit seinem von dem Drehelement 4 abgewandten Ende auf dem Grund der Bohrung 26 aufsetzt, wirken das erste Betätigungselement 3 und das zweite Betätigungselement 17 gegenseitig als Mitnehmer, je nach dem, in welcher Richtung die über den Grund der Bohrung 26 und dem darauf aufsitzenden Stift 27 übertragene Kraft wirkt.

Die Bohrung 26 in dem zweiten Betätigungselement 17 ist dabei gas- beziehungsweise luftgefüllt, sodass beim Verschieben des Stiftes 27 innerhalb der Bohrung 26 durch die Bohrung 26 ein Dämpfungselement 23 gebildet ist, welches die Bewegung des Stiftes 27 in der Bohrung 26 im Sinne einer Geräuschminimierung abdämpft. Hierzu ist die Bohrung 26 mit einem hier nicht dargestellten Membranelement beziehungsweise mit einer Öffnung versehen, durch welche die Luft- beziehungsweise das Gas entweichen kann.

Ferner ist in dieser Darstellung auch die Gehäuseplatte 25 dargestellt, auf der der Aktuator angeordnet ist. Weiterhin ist in der Darstellung der Figur 2 erkennbar, dass sich das Federelement 5 einerseits an einem Gehäusebauteil 16 des Aktuators und andererseits an dem Betätigungselement 17 abstützt.

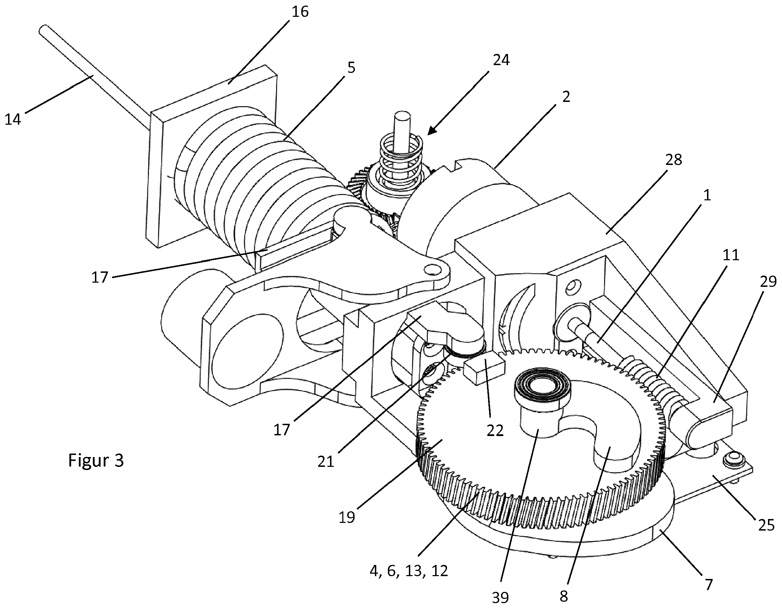

In Figur 3 ist der Aktuator nunmehr in einer perspektivischen Ansicht von oben dargestellt. Besonders gut zu erkennen ist hierbei, dass das als Kreisscheibe 6 und Zahnrad 13 ausgebildete Drehelement 4, welches drehbar gelagert ist. In dieser Darstellung ist nun auch der Antrieb 2 mit seiner Antriebswelle 1 zu erkennen, wobei auf der Antriebswelle 1 eine Schnecke 11 angeordnet ist, die mit dem Zahnrad 13 kämmt. Ferner ist hierbei ein weiteres Gehäusebauteil 28 erkennbar, welches auf der Gehäuseplatte 25 angeordnet ist und ein freies Ende 29 aufweist, in welchem die Antriebswelle 1 des Antriebs 2 drehbar gelagert beziehungsweise gehalten ist.

Auf der Fläche 19 des Drehelementes 4 ist dabei zum einen die zweite Steuerkurve 8 angeordnet, welche beim Verdrehen des Drehelementes 4 in Richtung seiner maximalen negativen Drehposition, also gegen den - in dieser Darstellung geltenden - Uhrzeigersinn in Eingriff bringbar ist mit dem zweiten Eingriffselement 21 des zweiten Betätigungselementes 17 zum Spannen des Federelementes 5. Dazu kommt der konvex ausgebildete Abschnitt der Steuerkurve in Anlage mit dem Eingriffselement 21, welches bei entspanntem Federelement 5 gegenüber der Darstellung in der Figur 3 in Richtung der Nabe 39 des Drehelementes 4 verschoben wäre.

Ferner ist auf der Fläche 19 ein Vorsprung 22 angeordnet, an welchem das zweite Eingriffselement 21 bei gespanntem Federelement anliegt. Im Betrieb eines Kraftfahrzeuges wird das Federelement 5, nach dem es vorgespannt wurde, mithilfe einer elektrischen Haltemagneteinrichtung 32 in der vorgespannten Position gehalten. In der Darstellung der Figur 3 ist dabei das Betätigungselement 3, welches hier verdeckt ist, in der P-Stufe des Automatikgetriebes gehalten, welches einer neutralen Winkelposition von 0° des Drehelementes entspricht. Sofern der Aktuator nun spannungsfrei ist, wird die Vorspannung des Federelementes 5 aufgrund der Anlage des Eingriffselementes 21 an dem Vorsprung 22 trotzdem aufrechterhalten, obwohl die Haltemagneteinrichtung 32 keinerlei Haltekraft mehr ausübt. In der Darstellung der Figur 3 ist ferner noch eine Notverstelleinrichtung 24 sichtbar, welche nachfolgend noch genauer erläutert wird.

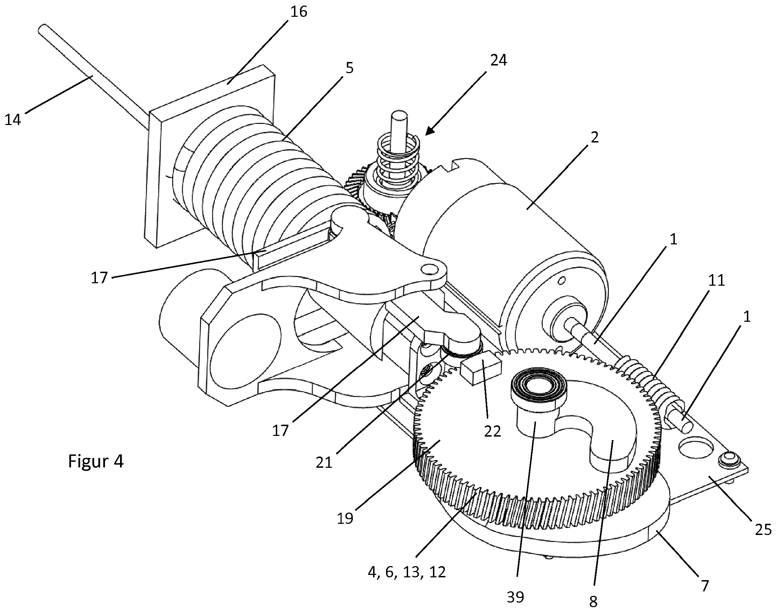

In der Figur 4 ist nunmehr nochmals die Darstellung der Figur 3 gezeigt, wobei hier das Gehäusebauteil 28 nicht dargestellt ist und somit der Antrieb 2 mit seiner Antriebswelle 1 deutlicher erkennbar ist.

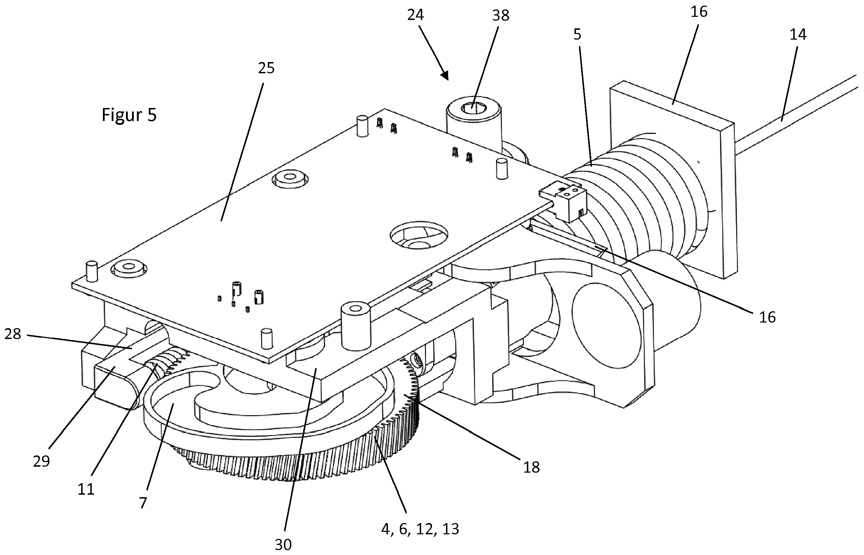

Figur 5 zeigt nunmehr den Aktuator gemäß den Figuren 3 und 4 in einer perspektivischen Ansicht von unten. Hierbei ist insbesondere besonders deutlich die erste Steuerkurve 7 erkennbar, welche auf der der Fläche 19 gegenüberliegenden Fläche 18 des Drehelementes 4 angeordnet ist. Ferner ist hierbei auch die Schnecke 11 der Antriebswelle 1 zu erkennen, welche mit dem Zahnrad 13 kämmt. Die Antriebswelle 1 ist dabei wieder in dem Ende 29 des Gehäusebauteils 28 drehbar gehalten, wobei dieses Gehäusebauteil 28 auf der Gehäuseplatte 25 angeordnet ist.

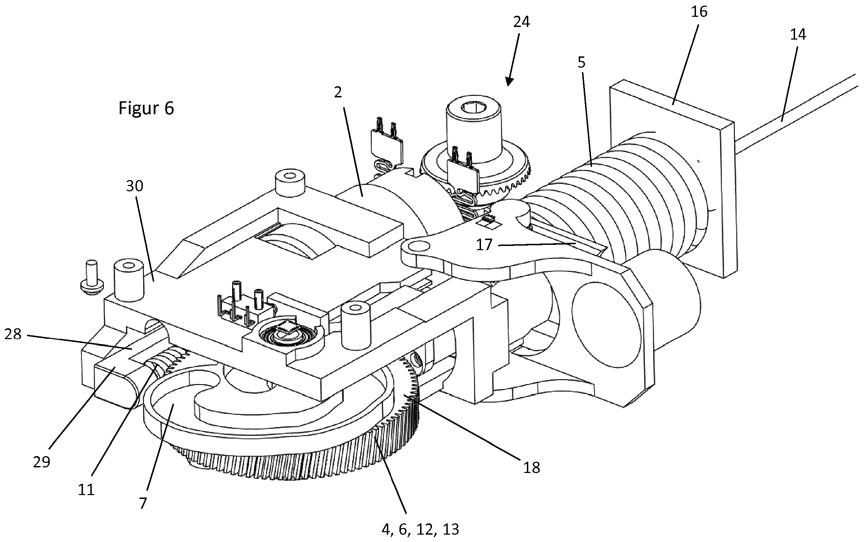

Figur 6 zeigt eine Darstellung der Figur 5 ohne die Gehäuseplatte 25.

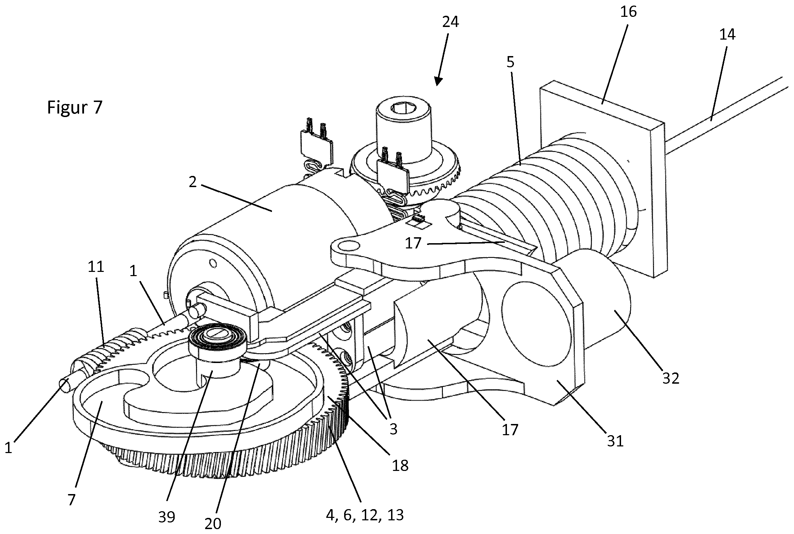

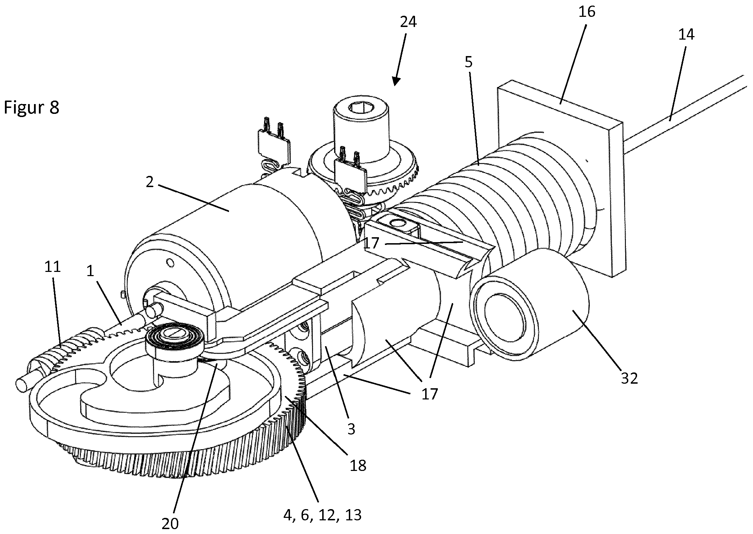

Figur 7 zeigt den Aktuator gemäß Figur 6 ohne dass in den Figuren 5 und 6 dargestellte Gehäusebauteil 30. Hierdurch ist nunmehr auch das erste Betätigungselement 3 erkennbar, welches einerseits mit dem Seilzug 14 zum Betätigen einer Schaltvorrichtung eines Automatikgetriebes verbunden und andererseits mit einem Eingriffselement 20 zum wirkverbindeneden Eingriff in die Steuerkurve 7 versehen ist. Deutlich zu erkennen ist in dieser Darstellung auch, dass das erste Betätigungselement 3 verschiebbar in dem zweiten Betätigungselement 17 gelagert ist, mit welchem das Federelement 5 gespannt wird. Noch deutlicher wird diese Anordnung in der Darstellung gemäß der Figur 8, in der auf ein weiteres Gehäusebauteil 31 verzichtet wurde, in welchem die Haltemagneteinrichtung 32 gehalten ist.

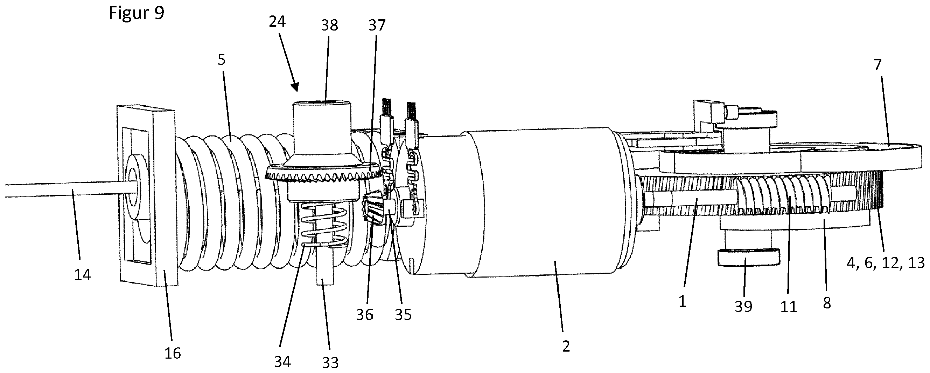

In Figur 9 ist nunmehr eine weitere Seitenansicht des Aktuators dargestellt, in welcher insbesondere die Notverstelleinrichtung 24 detaillierter zu erkennen ist. Die Notverstelleinrichtung 24 besteht dabei aus einem Stift 33, an welchem ein Zahnrad 37 angeordnet ist, welches über eine Öffnung 38 mit einem Werkzeug, insbesondere einem Imbusschlüssel, gedreht werden kann. Das Zahnrad 37 ist dabei entgegen einer Rückstellkraft einer Feder 34 federkraftbeaufschlagbar, sodass das Zahnrad 37 mit einem Keilzahnrad 36 einer Abtriebswelle 35 des Antriebs 2 in Wirkverbindung bringbar ist. Mittels dieser Notverstelleinrichtung 24 ist es möglich, das Drehelement 4 mithilfe eines Werkzeuges, insbesondere eines Imbusschlüssels, über die direkt mit der Antriebswelle 1 des Antriebs 2 verbundene Abtriebswelle 35 zu betätigen, sodass sowohl das Federelement 5 vorgespannt als auch das erste Betätigungselement 3 betätigt werden kann. Hierdurch ist es möglich, wenn das mit diesem Aktuator ausgestattete Kraftfahrzeug einem in der P-Stufe befindlichen Automatikschaltgetriebe abgestellt wurde, das erste Betätigungselement 3 zu bedienen, sodass die P-Stufe des Automatikgetriebes verlassen werden kann und das Fahrzeug bewegt werden kann, auch wenn keinerlei Spannung zum Betätigen des Antriebs 2 vorhanden ist. Dies wird insbesondere in Schadensfällen notwendig sein, bei denen das Fahrzeug nicht mehr betrieben werden kann, insbesondere dann, wenn keinerlei Spannung beziehungsweise keinerlei Stromquelle zur Verfügung steht und das Fahrzeug zum Abschleppen bewegt werden muss.

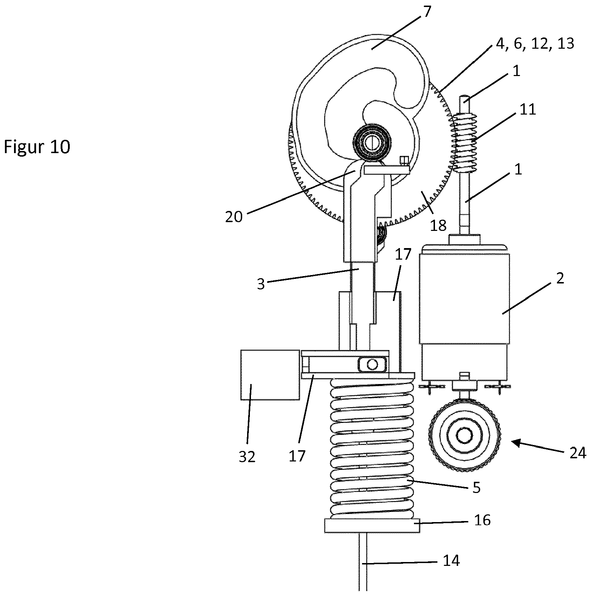

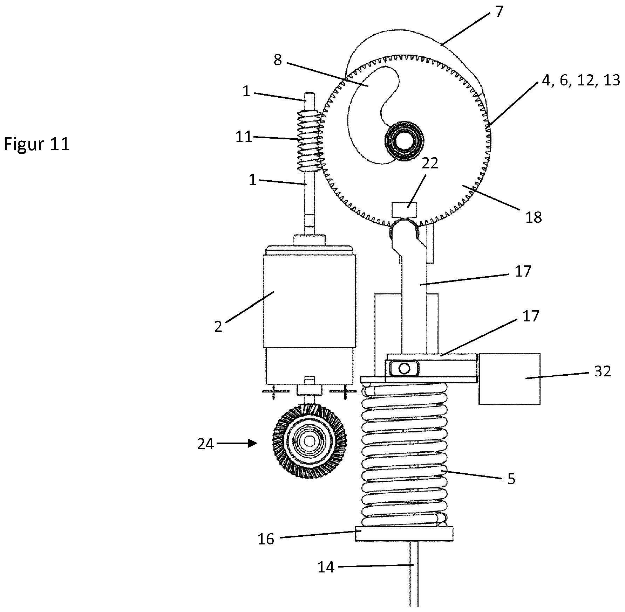

Die Figuren 10 und 11 dienen insbesondere dazu, die Funktionsweise des erfindungsgemäßen Aktuators zu beschreiben. Dabei befindet sich der Aktuator in diesen Darstellungen in einer Stellung, die der Stellung der P-Stufe eines Automatikgetriebes eines Kraftfahrzeuges und der neutralen Winkelposition 0° des Drehelementes 4 entspricht. Das Eingriffselement 20 des ersten Betätigungselementes 3 befindet sich wirkverbunden in Eingriff mit der ersten Steuerkurve 7, die auf der Fläche 18 des Drehelementes 4 angeordnet ist. Wird nun mittels des Antriebes 2, der Antriebswelle 1 und der Schnecke 11 das als Zahnrad 13 ausgebildete Drehelement 4 - in dieser Darstellung - gegen den Uhrzeigersinn, also in Richtung der maximalen positiven Drehpositionverdreht, so wird das Betätigungselement 3 aufgrund des Eingriffs des Eingriffselementes 20 in die Steuerkurve 7 in Richtung des Gehäusebauteils 16 bewegt, sodass sich mittels der von dem Seilzug 14 betätigten und hier nicht näher dargestellten Schalteinrichtung des Automatikgetriebes dieses aus seiner P-Stufe herausbewegt wird und unterschiedliche Schaltstufen, beispielsweise R, N, D, einstellbar sind. Das Drehelement 4 ist dabei in seiner Drehbewegung aufgrund der Steuerkurve 7 beschränkt, sodass eine Drehung um in etwa +180° oder einen anderen Wert möglich ist. Während der Drehung des Drehelementes 4 wird dabei die Vorspannung des Federelementes 5 in dessen Spannungsstellung mithilfe der Haltemagneteinrichtung 32 aufrechterhalten. Während der Bewegung des ersten Betätigungselementes 3 in Richtung des Gehäusebauteils 16 gleitet dessen Stift 27 innerhalb der Bohrung 26 in Richtung des Grunds 40 der Bohrung 26.

Tritt nun während des Betriebes des Kraftfahrzeuges nun ein Schaden auf, infolge dessen der Aktuator spannungsfrei ist, so ist auch die Haltemagneteinrichtung 32 aufgrund der fehlenden Spannung nicht mehr in der Lage, die Federvorspannung des Federelementes 5 aufrecht zu erhalten. Unter dem Einfluss der Rückstellkraft des Federelementes 5 bewegt sich dann das zweite Betätigungselement 17 in Richtung des Drehelementes 4, so dass der dabei mit dem Grund 40 der Bohrung 26 in Anlage kommende Stift 27 die Rückstellkraft des Federelementes 5 auch auf das erste Betätigungselement 3 überträgt und dieses mitnimmt. Aufgrund der Rückstellkraft des Federelementes 5 wird daher das Eingriffselement 20 des ersten Betätigungselementes 3 entlang der Steuerkurve 7 zurückgeführt und das Drehelement dabei - in dieser Darstellung im Uhrzeigersinn - von der im Maximalfall +180° Winkelposition des Drehelementes 4 der zu der ursprünglichen, neutralen Winkelposition 0° bewegt, bis das Automatikgetriebe dort wieder seine P-Stufe entsprechend Winkelposition des Drehelementes 4 eingenommen hat. Somit ist gewährleistet, dass das Automatikgetriebe auch im Schadensfall immer, insbesondere wenn das Kraftfahrzeug beziehungsweise der Aktuator spannungsfrei ist, automatisch unter Abbau der Rückstellkraft des Federelementes 4 die P-Stufe eingestellt wird.

Bei der vorliegend beschriebenen Ausführungsform ist es möglich, den Antrieb 2 in der der Rückstellbewegung entgegengesetzten Richtung anzutreiben, so dass sich das Drehelement 4 in der Figur 10 gegen den Uhrzeigersinn in Richtung der maximalen positiven Drehposition dreht. Auf diese Weise kann bewirkt werden, dass die Steuerkurve 7 mittels des Eingriffselementes 20 das Betätigungselement 3 in Richtung der Spannstellung des Federelementes 5, also in Richtung des Gehäusebauteils 16 zurückschiebt. Durch den Eingriff des Stiftes 27 an dem Grund 40 der Bohrung 26 innerhalb des zweiten Betätigungselementes 17 wird dabei die Rückstellbewegung des ersten Betätigungselementes 3 auf das zweite Betätigungselement 17 übertragen, so dass das zweite Betätigungselement 17, mit dem das Federelement 5 in Eingriff ist, das Federelement 5 in die Spannstellung unter Aufbau der Rückstellkraft zurückstellt.

Ausgehend von der Darstellung der Figur 10 ist es natürlich auch möglich, das Drehelement 4 im Uhrzeigersinn von seiner neutralen, 0° Winkelposition in eine maximale negative Winkelposition von bis -180° zu verdrehen. Hierbei findet allerdings keine Betätigung des ersten Betätigungselementes 3 statt, da die Steuerkurve 7 derart ausgebildet ist, dass das Eingriffselement 20 des ersten Betätigungselementes 3 seine Position nicht ändert. Bei einer derartigen Verdrehung wird allerdings gemäß der Darstellung in Figur 11 die auf der anderen Fläche 19 des als Kreisscheibe 6 ausgebildeten Drehelementes 4 angeordnete Steuerkurve 8 in Eingriff mit dem zweiten Eingriffselement 21 des zweiten Betätigungselementes 17 zum Spannen des Federelementes 5 gebracht.

Nachdem das Federelement 5 entsprechend gespannt wurde, wird das Drehelement 4 nunmehr wieder in die andere Richtung zur neutralen Drehposition gedreht, bis das Eingriffselement 21 des Betätigungselementes 17 an dem Vorsprung 22 zum Liegen kommt, wobei das Drehelement 4 dabei wieder seine 0° Winkelposition einnimmt. Während dieses Verdrehens wird die Vorspannung des Federelementes 5 durch die Magnethalteeinrichtung 32 aufrechterhalten. In diesem Zustand gemäß der Figur 11 kann das Fahrzeug nunmehr ordnungsgemäß abgestellt werden, wobei der Aktuator natürlich auch spannungsfrei wird. Aufgrund des Vorsprungs 22 wird allerdings die Vorspannung des Federelementes 5 auch ohne eine Spannung aufrechterhalten.

### Bezugszeichenliste

- 1: Antriebswelle
- 2: Antrieb
- 3: Betätigungselement
- 4: Drehelement
- 5: Federelement
- 6: Kreisscheibe
- 7: Steuerkurve
- 8: Steuerkurve
- 9: Gleitelement
- 10: Sicherungselement
- 11: Schnecke
- 12: Zahnradanordnung
- 13: Zahnrad
- 14: Seilzug
- 15: Gehäusedeckel
- 16: Gehäusebauteil
- 17: Betätigungselement
- 18: Fläche
- 19: Fläche
- 20: Eingriffselement
- 21: Eingriffselement
- 22: Vorsprung
- 23: Dämpfungselement
- 24: Notfalleinrichtung
- 25: Gehäuseplatte
- 26: Bohrung
- 27: Stift
- 28: Gehäusebauteil
- 29: Ende
- 30: Gehäusebauteil
- 31: Gehäusebauteil
- 32: Haltemagneteinrichtung
- 33: Stift
- 34: Feder
- 35: Abtriebswelle
- 36: Keilrad
- 37: Zahnrad
- 38: Öffnung
- 39: Nabe
- 40: Grund
- 41: Bohrung

## Patentansprüche

1. Aktuator mit einem Antrieb (2), einem mit einer Antriebswelle (1) des Antriebs (2) in Wirkverbindung stehenden ersten Betätigungselement (3) zum Betätigen einer Schalteinrichtung, einem Federelement (5), welches sich einerseits an einem Gehäusebauteil (16) des Aktuators und anderseits an einem zum Spannen des Federelementes (5) ausgebildeten zweiten Betätigungselement (17) abstützt, wobei das Federelement (5) mittels dem zweiten Betätigungselements (17) auch mit dem ersten Betätigungselement (3) wirkverbunden ist, wobei ein mittels der Antriebswelle (1) antreibbares und drehbar gelagertes Drehelement (4) vorgesehen ist, das einerseits mit einer ersten Steuerkurve (7), welche mit dem ersten Betätigungselement (3) zum Betätigen der Schalteinrichtung wirkverbunden ist, und andererseits mit einer zweiten Steuerkurve (8) zum Spannen des Federelementes (5) ausgebildet ist, wobei zum Eingriff in die erste Steuerkurve (7) ein erstes Eingriffselement (20) des ersten Betätigungselementes (3) vorgesehen ist, und wobei zum Eingriff in die zweite Steuerkurve (8) ein zweites Eingriffselement (21) des zweiten Betätigungselementes (17) vorgesehen ist, **dadurch gekennzeichnet, dass** eine elektrische Haltemagneteinrichtung (32) vorgesehen ist, die das unter Aufbau einer Rückstellkraft gespannte Federelement (5) in seiner Position hält.

2. Aktuator nach Anspruch 1, **dadurch gekennzeichnet, dass** das Drehelement (4) mit den beiden Steuerkurven (7, 8) derart ausgebildet ist, dass es durch die Antriebswelle (1) beziehungsweise den Antrieb (2) zwischen einer maximalen negativen Winkelposition bei bis zu -180° und einer maximalen positiven Winkelposition bei bis zu +180° verdrehbar ist, wobei das Federelement (5) bei einer Drehung des Drehelementes (4) aus seiner neutralen Winkelposition bei 0° zu seiner maximalen negativen Winkelposition bei bis zu -180° mittels der zweiten Steuerkurve (8) und des zweiten Eingriffselementes (21) des zweiten Betätigungselementes (17) gespannt wird.

3. Aktuator nach einem der vorhergehenden Ansprüche, **dadurch gekennzeichnet, dass** die erste Steuerkurve (7) derart ausgebildet ist, dass bei einer Drehung des Drehelementes (4) aus seiner neutralen Drehposition von 0° in Richtung seiner maximalen negativen Drehposition bei bis zu -180° die Position des Betätigungselementes (3) zum Betätigen einer Schalteinrichtung unverändert bleibt.

4. Aktuator nach einem der vorhergehenden Ansprüche, **dadurch gekennzeichnet, dass** das Drehelement (4) als Kreisscheibe (6) ausgebildet ist, an welcher die beiden Steuerkurven (7, 8) auf jeweils auf einer der gegenüberliegenden Flächen (18, 19) angeordnet sind.

5. Aktuator nach einem der vorhergehenden Ansprüche, **dadurch gekennzeichnet, dass** die erste Steuerkurve (7) derart ausgestaltet ist, dass beim Verdrehen des Drehelementes (4) zwischen seiner neutralen Winkelposition von 0° und seiner maximalen positiven Winkelposition von bis zu +180° das Federelement (5) unter Aufbau einer Rückstellkraft gespannt wird.

6. Aktuator nach einem der vorhergehenden Ansprüche, **dadurch gekennzeichnet, dass** an der Fläche (19) des Drehelementes (4) ein Vorsprung (22) zur Anlage des zweiten Eingriffselementes (21) angeordnet ist.

7. Aktuator nach einem der vorhergehenden Ansprüche, **dadurch gekennzeichnet, dass** auf der Antriebswelle (1) eine Schnecke (11) angeordnet ist, durch welche eine Zahnradanordnung (12) angetrieben wird, die wiederum das Drehelement (4) antreibt.

8. Aktuator nach Anspruch 7, **dadurch gekennzeichnet, dass** die Zahnradanordnung (12) wenigstens ein Zahnrad (13) aufweist, das mit der Schnecke (11) in Wirkverbindung steht.

9. Aktuator nach einem der vorhergehenden Ansprüche, **dadurch gekennzeichnet, dass** ein Dämpfungselement (23) vorgesehen ist, welches die Bewegung des Drehelementes (4) und/oder des ersten Betätigungselementes (3) dämpft, wenn das Drehelement (4) unter Einwirkung der Rückstellkraft des Federelementes (5) verdreht wird.

10. Vorrichtung zum Einlegen einer Parksperre eines Kraftfahrzeugautomatikgetriebes mit einem Aktuator nach einem der Ansprüche 1 bis 9.

11. Vorrichtung nach Anspruch 10, **dadurch gekennzeichnet, dass** eine mechanische, elektromechanische, elektrische, elektronische, hydraulische oder pneumatische Notverstelleinrichtung (24) vorgesehen ist, mit welcher das Betätigungselement (3) verfahrbar und/oder das Federelement (5) spannbar ist, wenn der Antrieb (2) nicht antreibbar ist.

12. Kraftfahrzeug mit einem Automatikgetriebe und einer damit zusammenwirkenden Vorrichtung nach einem der Ansprüche 10 oder 11.

## Claims

1. Actuator having a drive device (2), a first actuating element (3), which is operatively connected to the drive shaft (1) of the drive device (2), for actuating a switching device, a spring element (5), which is supported on one side on a housing component (16) of the actuator and on the other side on a second actuating element (17) which is configured for stressing the spring element (5), wherein the spring element (5) is also operatively connected to the first actuating element (3) by means of the second actuating element (17), wherein a rotational element (4) is provided, which can be driven by means of the drive shaft (1) and which is rotatably mounted and which is configured on the one hand with a first control cam (7), which is operatively connected to the first actuating element (3), for actuating the switching device and on the other hand with a second control cam (8) for stressing the spring element (5), wherein a first engagement element (20) of the first actuating element (3) is provided for engaging into the first control cam (7), and wherein a second engagement element (21) of the second actuating element (17) is provided for engaging into the second control cam (8), **characterized in that** an electrical holding magnet device (32) is provided, which holds the spring element (5), which is stressed while building up a restoring force, in its position.

2. Actuator according to Claim 1, **characterized in that** the rotational element (4) is configured with the two control cams (7, 8) such that it can be turned between a maximum negative angle position at up to -180° and a maximum positive angle position at up to +180° by the drive shaft (1) or the drive device (2), wherein the spring element (5), upon rotation of the rotational element (4) out of its neutral angle position at 0° to its maximum negative angle position at up to -180°, is stressed by means of the second control cam (8) and the second engagement element (21) of the second operating element (17).

3. Actuator according to either of the preceding claims, **characterized in that** the first control cam (7) is configured such that the position of the actuating element (3) for actuating a switching device remains unchanged upon rotation of the rotational element (4) out of its neutral rotational position of 0° in the direction of its maximum negative rotational position at up to -180°.

4. Actuator according to one of the preceding claims, **characterized in that** the rotational element (4) is configured as a circular disc (6), on which the two control cams (7, 8) are arranged respectively on one of the opposite surfaces (18, 19).

5. Actuator according to one of the preceding claims, **characterized in that** the first control cam (7) is configured such that the spring element (5) is stressed while building up a restoring force upon turning of the rotational element (4) between its neutral angle position of 0° and its maximum positive angle position of up to +180°.

6. Actuator according to one of the preceding claims, **characterized in that** a projection (22) for application of the second engagement element (21) is arranged on the surface (19) of the rotational element (4).

7. Actuator according to one of the preceding claims, **characterized in that** a worm (11) is arranged on the drive shaft (1), by way of which a gear arrangement (12) is driven, which gear arrangement in turn drives the rotational element (4).

8. Actuator according to Claim 7, **characterized in that** the gear arrangement (12) has at least one gear (13) which is operatively connected to the worm (11).

9. Actuator according to one of the preceding claims, **characterized in that** a damping element (23) is provided, which damps the movement of the rotational element (4) and/or of the first actuating element (3) when the rotational element (4) is turned under the action of the restoring force of the spring element (5).

10. Device for engaging a parking lock of a motor-vehicle automatic transmission having an actuator according to one of Claims 1 to 9.

11. Device according to Claim 10, **characterized in that** a mechanical, electromechanical, electrical, electronic, hydraulic or pneumatic emergency adjustment device (24) is provided, with which the actuating element (3) can be moved and/or the spring element (5) can be stressed when the drive device (2) cannot be driven.

12. Motor vehicle having an automatic transmission and a device according to either of Claims 10 and 11 which interacts with said automatic transmission.

## Revendications

1. Actionneur, comprenant un entraînement (2), un premier élément d'actionnement (3) en relation fonctionnelle avec un arbre d'entraînement (1) de l'entraînement (2) et destiné à actionner un mécanisme de commutation, un élément ressort (5) qui prend appui d'une part sur un composant de boîtier (16) de l'actionneur et d'autre part sur un deuxième élément d'actionnement (17) réalisé pour tendre l'élément ressort (5), l'élément ressort (5) étant mis en relation fonctionnelle également avec le premier élément d'actionnement (3), au moyen du deuxième élément d'actionnement (17), dans lequel un élément rotatif (4) monté en rotation et pouvant être entraîné au moyen de l'arbre d'entraînement (1) est prévu qui est réalisé d'une part avec une première came de commande (7) qui est en relation fonctionnelle avec le premier élément d'actionnement (3) pour actionner le mécanisme de commutation, et est d'autre part réalisé avec une deuxième came de commande (8) pour tendre l'élément ressort (5), dans lequel un premier élément de mise en prise (20) du premier élément d'actionnement (3) est prévu pour venir en prise avec la première came de commande (7), et dans lequel, pour la mise en prise avec la deuxième came de commande (8), un deuxième élément de mise en prise (21) du deuxième élément d'actionnement (17) est prévu,**caractérisé en ce qu'**un dispositif d'aimant de retenue électrique (32) est prévu qui retient l'élément ressort (5) tendu dans sa position en développant une force de rappel.

2. Actionneur selon la revendication 1, **caractérisé en ce que** l'élément rotatif (4) pourvu des deux cames de commande (7, 8) est réalisé de telle sorte que l'arbre d'entraînement (1) ou l'entraînement (2) peut le faire tourner entre une position angulaire négative maximale de jusqu'à -180° et une position angulaire positive maximale de jusqu'à +180°, dans lequel l'élément ressort (5), lors d'une rotation de l'élément rotatif (4) de sa position angulaire neutre de 0° vers sa position angulaire négative maximale de jusqu'à -180°, est tendu au moyen de la deuxième came de commande (8) et du deuxième élément de mise en prise (21) du deuxième élément d'actionnement (17).

3. Actionneur selon l'une quelconque des revendications précédentes, **caractérisé en ce que** la première came de commande (7) est réalisée de telle sorte qu'en cas de rotation de l'élément rotatif (4) de sa position de rotation neutre de 0° en direction de sa position de rotation négative maximale de jusqu'à -180°, la position de l'élément d'actionnement (3) pour l'actionnement d'un mécanisme de commutation reste inchangée.

4. Actionneur selon l'une quelconque des revendications précédentes, **caractérisé en ce que** l'élément rotatif (4) est réalisée sous forme de disque circulaire (6) sur lequel sont disposées les deux cames de commande (7, 8) respectivement sur l'une des surfaces opposées (18, 19).

5. Actionneur selon l'une quelconque des revendications précédentes, **caractérisé en ce que** la première came de commande (7) est configurée de telle sorte qu'en cas de rotation de l'élément rotatif (4) entre sa position angulaire neutre de 0° et sa position angulaire positive maximale de jusqu'à +180°, l'élément ressort (5) est tendu en développant une force de rappel.

6. Actionneur selon l'une quelconque des revendications précédentes, **caractérisé en ce que** sur la surface (19) de l'élément rotatif (4) est disposée une saillie (22) pour l'application du deuxième élément de mise en prise (21).

7. Actionneur selon l'une quelconque des revendications précédentes, **caractérisé en ce que** sur l'arbre d'entraînement (1) est disposée une vis sans fin (11) qui entraîne un agencement de roue dentée (12) qui entraîne à son tour l'élément rotatif (4).

8. Actionneur selon la revendication 7, **caractérisé en ce que** l'agencement de roue dentée (12) présente au moins une roue dentée (13) qui est en relation fonctionnelle avec la vis sans fin (11).

9. Actionneur selon l'une quelconque des revendications précédentes, **caractérisé en ce qu'**un élément amortisseur (23) est prévu qui amortit le mouvement de l'élément rotatif (4) et/ou du premier élément d'actionnement (3) lorsque l'élément rotatif (4) tourne sous l'effet de la force de rappel de l'élément ressort (5).

10. Dispositif d'application d'un frein de stationnement d'une transmission automatique de véhicule automobile, comprenant un actionneur selon l'une quelconque des revendications 1 à 9.

11. Dispositif selon la revendication 10, **caractérisé en ce qu'**un moyen de réglage de secours (24) mécanique, électromécanique, électrique, électronique, hydraulique ou pneumatique est prévu qui permet de déplacer l'élément d'actionnement (3) et/ou de tendre l'élément ressort (5) lorsque l'entraînement (2) ne peut pas être entraîné.

12. Véhicule automobile, comprenant une transmission automatique et un dispositif selon l'une quelconque des revendications 10 ou 11 coopérant avec celle-ci.
